(19) Europäisches Patentamt
European Patent Office
Office européen des brevets

(11) Numéro de publication: **0 337 843**
**A2**

(12) **DEMANDE DE BREVET EUROPEEN**

(21) Numéro de dépôt: **89400876.2**

(51) Int. Cl.4: **C 08 G 79/08**
C 04 B 35/00

(22) Date de dépôt: **29.03.89**

(30) Priorité: **01.04.88 FR 8804365**

(43) Date de publication de la demande:
**18.10.89 Bulletin 89/42**

(84) Etats contractants désignés:
**AT BE CH DE ES FR GB GR IT LI LU NL SE**

(71) Demandeur: **RHONE POULENC CHIMIE**
**25 Quai Paul Doumer**
**F-92408 Courbevoie Cédex (FR)**

(72) Inventeur: **Ardaud, Pierre**
**133, rue Clémenceau**
**F-69110-Sainte Foy Les Lyon (FR)**

**Lebrun, Jean-Jacques**
**Centre Hospitalier de Lyon Sud Chemin du Grand Revoyet F-69310-Pierre Benite (FR)**

**Mignani, Gérard**
**2, Avenue des Frères Lumière**
**F-69008-Lyon (FR)**

(74) Mandataire: **Cazes, Jean-Marie et al**
**RHONE-POULENC INTERSERVICES Service Brevets Chimie 25, quai Paul Doumer**
**F-92408 Courbevoie Cédex (FR)**

(54) **Procédé de préparation de polymères à base de bore et d'azote précurseurs de nitrure de bore.**

(57) L'invention a trait à un procédé de préparation de polymères à base de bore et d'azote, qui est caractérisé par le fait que l'on fait réagir a) une composition de matière obtenue par thermolyse en masse d'au moins un composé de formule (1) :

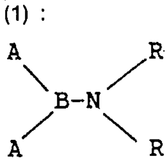

(1)

dans laquelle A représente un atome d'halogène et R un radical choisi parmi l'atome d'hydrogène, les radicaux hydrocarbonés et les radicaux organosilylés et hydrogénoorganosilylés, sur b) un composé comprenant au moins un groupement $NH_2$.

EP 0 337 843 A2

**Description**

## PROCEDE DE PREPARATION DE POLYMERES A BASE DE BORE ET D'AZOTE PRECURSEURS DE NITRURE DE BORE

La présente invention a trait à un procédé de préparation de polymères à base de bore et d'azote, susceptibles d'être utilisés dans la fabrication de produits et articles céramiques à base de nitrure de bore, notamment sous forme de fibres.

Elle concerne également des compositions de matière nouvelles, utilisables notamment pour la synthèse desdits polymères selon un procédé conforme à l'invention.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives. Toutefois, les pièces obtenues présentent une microporosité qui peut être très génante pour certaines applications.

Plus récemment, on a découvert qu'il était possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970°C, à des fibres de nitrure de bore.

Toutefois, le composé cyclique de départ décrit dans ce document est très difficile à préparer, donc coûteux, et, de ce fait, ne peut guère laisser espérer d'application réelle à l'échelle d'une production industrielle.

Plus spécifiquement, ce composé cyclique est préparé par thermolyse, dans du xylène à reflux, d'un dichloro-(trialkylsilylamino)-borane de formule

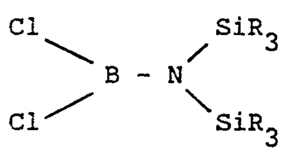

(R = radical alkyl)

Un tel procédé présente le double désavantage d'une part d'avoir un rendement faible (de l'ordre de 20 %) et d'autre part de nécessiter l'utilisation d'un solvant organique avec toutes les précautions d'emploi et les surcoûts qui en résultent (sécurité, élimination du solvant, pertes en solvant, ...).

Enfin, le rendement pondéral maximal en nitrure de bore susceptible d'être obtenu à la pyrolyse avec le polymère organométallique synthétisé à partir de ce composé cyclique peut être insuffisant.

La présente invention a donc pour but de résoudre les problèmes ci-dessus et de proposer des moyens simples, efficaces, économiques et de mise en oeuvre aisée, pour obtenir sous des formes les plus diverses (fils, fibres, articles moulés, revêtements, pellicules, films, etc...) des polymères organométalliques à base de bore et d'azote qui, lors de leur pyrolyse, donnent des produits à base de nitrure de bore avec de bons rendements pondéraux.

A cet effet, la Demanderesse propose un procédé de préparation de polymères à base de bore et d'azote qui est caractérisé par le fait que l'on fait réagir a) une composition de matière obtenue par thermolyse en masse d'au moins un composé de formule (1) :

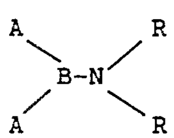

(1)

dans laquelle A représente un atome d'halogène et R un radical choisi parmi l'atome d'hydrogène, les radicaux hydrocarbonés et les radicaux organosilylés et hydrogénoorganosilylés, sur b) un composé comprenant au moins un groupement $NH_2$.

Pour des raisons de simplicité, on appelera "thermolyse" le procédé consistant à préparer les compositions de matière susmentionnées, et "procédé global" le procédé de synthèse, pris dans son entier, des polymères précurseurs.

Pour des raisons de clarté, la description qui suit de la présente invention commencera par l'exposé de la thermolyse et se terminera par l'exposé du procédé global, avec ses diverses variantes de mise en oeuvre.

THERMOLYSE

Le composé de départ de formule (1) est un composé généralement chloré, bien que des radicaux A du type fluor, brome et iode ne soient bien évidemment pas exclus.

Les radicaux hydrocarbonés les plus usités sont les radicaux alkyles, cycloalkyles, aryles, alkylaryles et arylalkyles, ainsi que les radicaux alcenyles et alcynyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux arylalkyles : les radicaux benzyle et phénylethyle.

A titre de radicaux alcenyles, on peut citer plus particulièrement les radicaux vinyle, allyle, butenyle et pentenyle.

Enfin, on peut citer comme radicaux alcynyles, les radicaux éthynyle, propynyle et butynyle.

Selon un mode préférentiel de réalisation de l'invention, le radical R est un radical organosilylé, et plus particulièrement un radical (triorgano)silylé. Encore plus préférentiellement, on utilise un radical (trialkyl)silylé, tel que notamment le radical triméthyl, triéthyl, tripropyl, tributyl, tripentyl, trihexyl, triheptyl et trioctyl-silylé. Le radical (triméthyl)silylé convient particulièrement bien.

Les composés de formule (1) tels que notamment définis ci-dessus sont bien connus de l'état de la technique, et peuvent être préparés par tout moyen connu en soi.

Par exemple, dans le cas de radicaux R de type alkyles, on pourra se référer notamment aux travaux de WILBERG et SCHUSTER (Zeitschrist für Anorganische Chemie, 1933, 213, page 77), de BROWN (Journal of American Chemical Society, 1952, 74, page 1219), ou bien encore de BURG et BANUS (Journal of American Chemical Society, 1954, 76, page 3903).

En ce qui concerne des radicaux R du type triorganosilylé, on pourra se reporter aux travaux de JENNE et NIEDENZU (Inorganic Chemistry, 1964, 3, 68), de SUJISHII et WITZ (Journal of American Ceramic Society, 1957, 79, page 2447), ou bien encore de WANNAGAT (Angew Chemie International Edition, 3, 1964, page 633).

D'une manière générale, le composé désiré de formule (1)

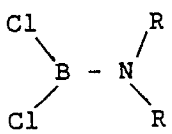

peut être obtenu par action de $BCl_3$ sur

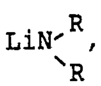

avec des conditions de températures et de rapports molaires convenables.

Selon une caractéristique essentielle du procédé selon l'invention, la thermolyse du composé de formule (1) est opérée en masse.

Cette caractéristique permet de résoudre un double problème :

- d'une part, l'utilisation d'un milieu solvant organique est évitée, d'où il s'en suit une facilité et une économie de mise en oeuvre accrues,
- et d'autre part cette thermolyse permet d'obtenir de nombreux produits cycliques et ceci avec un très bon rendement puisque se situant aux environs de 60 %.

Selon l'invention, cette thermolyse en masse est généralement effectuée à une température comprise entre 100° C et 300° C, et de préférence aux environs de 200° C, la température supérieure limitante étant celle à partir de laquelle réactifs et/ou produits de réaction sont susceptibles de se dégrader.

La durée de la thermolyse peut s'étaler de quelques heures à plusieurs dizaines d'heures ; d'une manière générale, plus la température à laquelle on opère est élevée et plus cette durée peut être raccourcie.

A l'issue de cette thermolyse, on récupère une composition comprenant d'une part la partie du composé de formule (1) qui n'a pas réagie et d'autre part un mélange de polymères cycliques de structures variables.

Ainsi, dans le cas particulier d'une thermolyse en masse d'un composé initial de formule

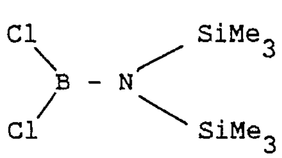

$(Me = CH_3)$

l'analyse met en évidence, au sein desdits polymères cycliques, la présence de structures du type :

a)

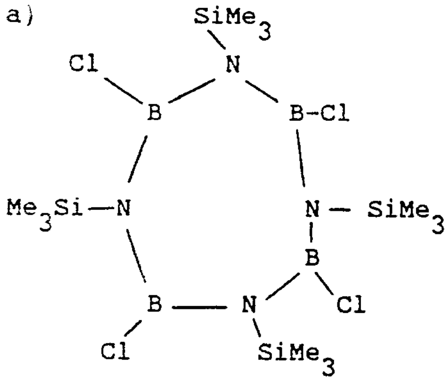

et/ou

isomères

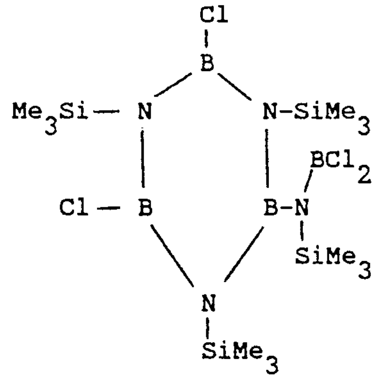

b)

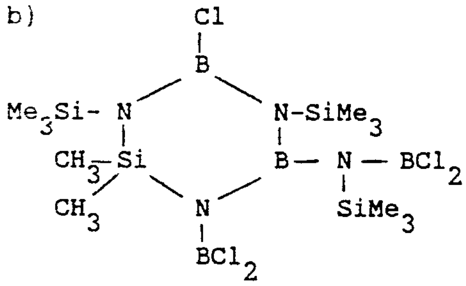

et/ou isomères

c)

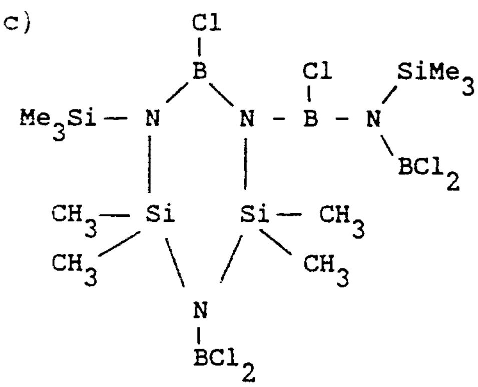

et/ou

isomères

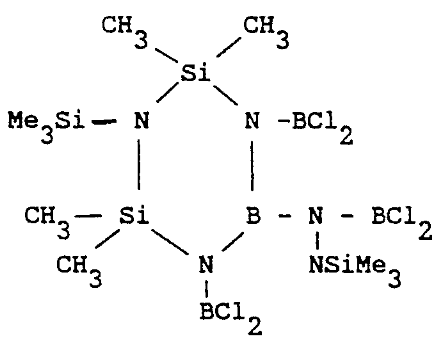

Il ressort donc clairement que les polymères cycliques obtenus selon ce procédé sont différents du polymère cyclique utilisé pour la mise en oeuvre du procédé du brevet US 4 581 468 et qui répond essentiellement à la formule

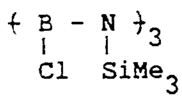

Les polymères cycliques selon l'invention peuvent en outre, si on le désire, être séparés du mélange issu de la thermolyse, et ceci par tout moyen connu en soi, notamment par évaporation sous vide de la fraction de composés de formule (1) n'ayant pas réagie ; les polymères cycliques sont alors récupérés sous la forme d'un solide.

Comme expliqué ci-après, la suite de la mise en oeuvre du procédé global selon l'invention peut alors s'opérer soit sur la composition issue directement de l'étape de thermolyse, soit uniquement sur la fraction des polymères cycliques extraite de ladite composition.

PROCEDE GLOBAL

Les composés qui présentent au moins un groupement $NH_2$, et qui sont utilisés dans le présent procédé global, sont appelés agents d'aminolyse dans le cas le plus général (composé aminé présentant au moins un groupement $NH_2$), et agent d'ammonolyse dans le cas plus particulier où il s'agit de l'ammoniac.

D'autre part, et en conséquence de ce qui précède, les produits de réaction issus du procédé global seront alors appelés, selon le cas, aminolysats ou ammonolysats, ces derniers étant donc inclus dans la famille plus générale des aminolysats.

Parmi les agents d'aminolyse rentrant dans le cadre de la présente invention, on peut citer l'ammoniac, les amines primaires, les diamines (hydrazine, alkylhydrazine, hydrazide, alkylenediamine ..), les amides, les silylamines, etc...

On utilise de préférence des composés qui répondent à la formule (2) suivante :

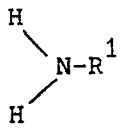 (2)

dans laquelle le radical $R^1$ est choisi parmi l'atome d'hydrogène, les radicaux hydrocarbonés et les radicaux silylés. Conviennent ainsi plus particulièrement :

- l'ammoniac ($R^1$ = atome d'hydrogène)
- les organoamines primaires ($R^1$ = radical alkyle, cycloalkyle, aryle, alkylaryle ou arylalkyle), telles que par exemple la méthylamine, l'éthylamine, la propylamine, la butylamine, la pentylamine, l'hexylamine, l'heptylamine et l'octylamine, la cyclopropylamine, la phénylamine...
- les silylamines, et plus particulièrement les triorganosilylamines comme la (triméthylsilyl)amine et la (triéthylsilyl)amine, ou bien encore les hydrogénoorganosilylamines comme l'(hydrogénodiméthylsilyl)amine.

Les agents d'aminolyse préférés sont les alkylamines primaires et l'ammoniac.

Selon un mode de mise en oeuvre encore plus préféré, on opère avec l'ammoniac.

Comme déjà indiqué, l'aminolyse peut être opérée soit sur une composition issue directement de la thermolyse en masse susmentionée, c'est à dire un mélange de composés cycliques et de composés de formule (1), soit uniquement sur les composés cycliques préalablement séparés.

Le schéma général des réactions d'aminolyse au sein du milieu réactionnel est le suivant :

>N-H + Cl-B< → >N-B< + HCl

La réaction d'aminolyse peut être opérée en masse, ou, de préférence, en milieu solvant organique (hexane, pentane, toluène ...) et sous conditions anhydres.

On travaille généralement à la pression atmosphérique, bien que des pressions inférieures ou supérieures ne soient bien évidement pas exclues.

D'autre part, les réactions d'aminolyse étant généralement assez exothermiques, on préfère opérer à basse température.

La durée de la réaction, suivant les quantités de réactifs introduites, peut varier de quelques minutes à plusieurs heures.

Selon une variante préférée du procédé global selon l'invention, on procède à ladite aminolyse en présence en outre d'un trihalogénoborane de formule $BA_3$, dans laquelle A désigne un atome d'halogène.

La Demanderesse a en effet découvert que, de façon totalement inattendue et surprenante, cette co-aminolyse permet d'aboutir à ces polymères auxquels une structure à réseau particulièrement réticulé confère une stabilité thermique accrue lors de la pyrolyse, et de ce fait augmente les rendements en nitrure de bore.

Le composé $BA_3$ généralement utilisé est le trichloroborane $BCl_3$, bien que tout autre halogénoborane puisse convenir, comme par exemple un trifluoro- un tribromo- ou un triiodoborane.

La proportion de trihalogénoborane dans le milieu réactionnel initial peut varier dans une large mesure. D'une manière générale, on observe que plus le pourcentage de trihalogénoborane augmente dans ce milieu, et plus le rendement pyrolytique en nitrure de bore du polymère obtenu en fin de réaction s'élève.

A l'issue de cette étape de réaction, en présence ou non de $BA_3$, on sépare le polymère du milieu de réaction, notamment du chlorydrate d'ammonium formé, et ceci par tout moyen connu en soi, par exemple par filtration, ou bien encore par extraction et décantation au moyen notamment d'une solution d'ammoniaque.

Le polymère ainsi récupéré, après éventuellement élimination du solvant puis séchage, constitue alors la production.

Si nécessaire, on peut, dans une étape ultérieure, traiter thermiquement ce polymère dans le but d'améliorer encore sa tenue à la pyrolyse, et donc son rendement pondéral en nitrure de bore. Ce post traitement thermique, généralement opéré à une température comprise entre 100 et 200°C, a pour effet de modifier la structure interne du polymère, probablement en augmentant son caractère réticulé, ce qui peut expliquer sa tenue thermique améliorée.

Les polymères à base de bore de d'azote obtenus selon l'invention présentent une masse molaire moyenne en nombre qui peut être comprise entre 300 et 10 000, de préférence comprise entre 500 et 1 000.

Ils présentent d'autre part une masse molaire moyenne en poids pouvant s'étaler entre 600 et 20 000, de préférence entre 1 000 et 2 000.

Suivant les conditions de mise en oeuvre du procédé (utilisation ou non de $BA_3$, quantités de $BA_3$ utilisées, ...) les polymères selon l'invention peuvent se présenter, à température ambiante, sous une forme allant d'une huile assez visqueuse ou très visqueuse jusqu'à l'état solide.

Les polymères selon l'invention sont d'autre part solubles dans la plupart des solvants organiques usuels

(hexane, toluène ...), ce qui peut être très avantageux au niveau de leur possibilité de mise en forme.

Les polymères à base de bore et d'azote selon l'invention trouvent une application toute particulière dans la fabrication de produits et articles céramiques contenant, au moins en partie, du nitrure de bore.

Dans le cas le plus général (obtention de poudres), on pyrolyse alors le polymère dans une atmosphère inerte, sous vide, ou de préférence, sous ammoniac, à une température allant de 100 à 2 000° C jusqu'à ce que le polymère soit converti entièrement en nitrure de bore.

Le polymère, avant pyrolyse, peut également être mis en forme, par moulage ou par filage par example. Dans le cas où l'on désire obtenir des fibres, le polymère est filé au moyen d'une filière classique (après fusion éventuelle si le polymère est initialement à l'état solide), puis est traité thermiquement à une température allant de 100 à 2 000 °C et de préférence sous atmosphère d'ammoniac, pour donner une fibre en nitrure de bore.

Les fibres obtenues peuvent alors servir de structure de renforcement pour des matériaux composites du type céramique/céramique ou céramique/métal.

Des exemples illustrants l'invention vont maintenant être donnés.

Example 1

Dans un ballon de 500 ml et sous azote, on introduit 266 g de

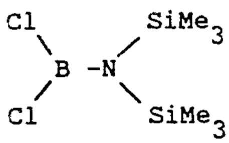

($Me = CH_3$) puis on porte cette masse à 200° C durant 42 heures. On observe la libération de $Me_3SiCl$.

La composition ainsi obtenue est alors évaporée sous vide.

On sépare ainsi d'une part une fraction contenant du $Me_3SiCl$ et 96 g d'un liquide essentiellement constitué de

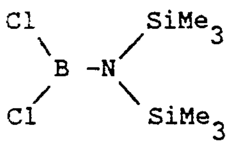

(fraction évaporée) et d'autre part, en culot, une fraction solide constituée par 86,3 g d'un solide blanc.

Le rendement isolé, en motif 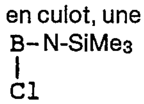 , est de l'ordre de 60 %.

Une analyse en spectrométrie de masse en mode d'ionisation négatif par capture d'électrons en utilisant l'air comme mélange réactant (NCI-air) du solide ainsi récupéré, met en évidence, au sein dudit solide, la présence d'entités structurelles du type d'une part $[Me_3SiN\text{-}B\text{-}Cl]_4$ et d'autre part du type $[Me_3SiNBCl]_4 + [-CH_3 + Cl]_n$ avec n = 0,1 et 2.

Les motifs isotopiques sont comparables à ceux obtenus par calcul et laissent envisager les structures cycliques du type :

a)

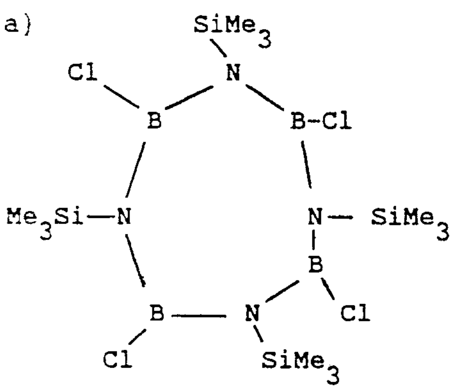

et/ou isomères

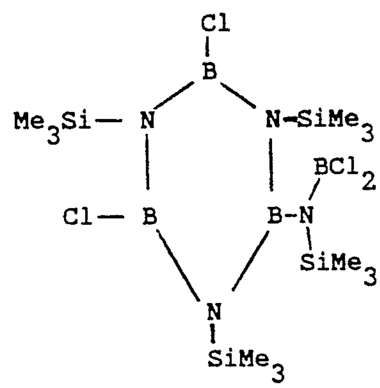

b) 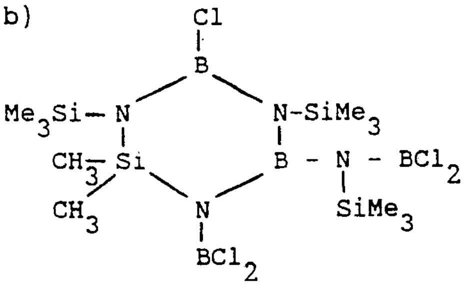 et/ou isomères

c) 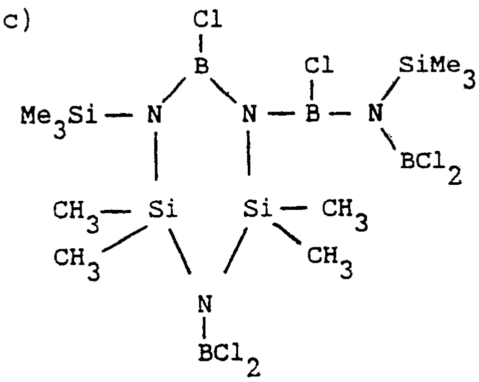 et/ou isomères 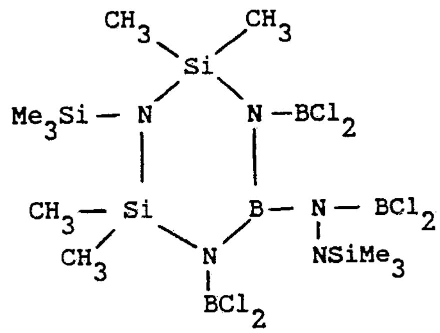

EXEMPLE 2

Dans un réacteur de deux litres double enveloppe, on introduit sous azote 115,8 g d'un composé solide tel que préparé à l'exemple 1, et 850 ml d'hexane sec.

On refroidit ce mélange à -38°C puis on introduit 160 litres d'ammoniac sous un débit de 15 l/heure ; la température monte jusqu'aux environs de -5°C puis on laisse revenir le milieu réactionnel à la température ambiante sous un faible courant d'ammoniac.

Il y a alors formation d'un précipité blanc composé majoritairement de chlorure d'ammonium.

Après filtration, rincage à l'hexane puis évaporation du solvant, on récupère 99,4 g d'une huile jaune limpide, constituant un polymère à base de bore de d'azote selon l'invention.

Le rendement isolé de la réaction d'ammonolyse est pratiquement quantitatif basé sur le motif $B-NH_2-NSiMe_3$.

Les caractéristiques du polymère sont les suivantes :

$\overline{M}n$ = 460 (masse molaire moyenne en nombre)
$\overline{M}w$ = 500 (masse molaire moyenne en poids)
IP = 1,08 (indice de polydispersité)
TGA (sous hélium à 850° C) = 10 %

EXEMPLE 3

Dans un ballon de 250 ml et sous azote, on introduit 66,9 g d'un polymère préparé selon l'exemple 2. On chauffe ce polymère pendant 6 heures à 160°C. Après refroidissement, on récupère 54,0 g d'une huile très visqueuse.

Les caractéristiques du polymère constituant cette huile sont les suivantes :

$\overline{M}n$ = 550
$\overline{M}w$ = 670
$\overline{I}P$ = 1,21
TGA (sous He à 850°C) = 16 %

EXEMPLE 4

Dans un réacteur de 2 litres double enveloppe, on introduit, sous un courant d'azote et à -41°C, 1,70 litre d'hexane sec, 60,6 g de $BCl_3$, 93,3 g de

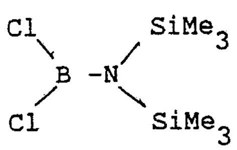

et 92,1 g d'un composé solide tel que préparé à l'exemple 1 (polymères cycliques).

On introduit alors dans ce mélange 207 litres d'ammoniac sous un débit de 45 l/heure.

La température monte jusqu'à -5° C, puis on laisse revenir le milieu réactionnel à température ambiante sous un faible courant de $NH_3$.

Après filtration et évaporation du solvant, on récupère 134,5 g d'une huile très visqueuse.

On porte alors cette huile à 70° C pendant une heure sous vide puis on laisse revenir à température ambiante.

On récupère alors 128,4 g d'un solide collant. Le rendement isolé est de 76,1 %.

Les caractéristiques du polymère constituant ce solide sont les suivantes :

$\overline{M}n$ = 840
$\overline{M}w$ = 1420
IP = 1,69
température de ramollissement : 80° C
TGA (sous He à 850° C) = 30,9 %.

EXEMPLE 5

Dans un ballon de 500 ml, on charge 250 g (1,034 mole) de

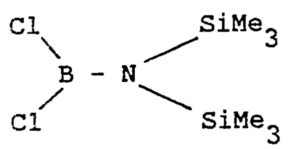

que l'on thermolyse en masse comme dans l'exemple 1.

Le $(CH_3)_3SiCl$ formé au cours de cette réaction est éliminé sous vide.

On récupère ainsi 168,7 g d'un liquide composé de :

- 42, 5 % en poids de

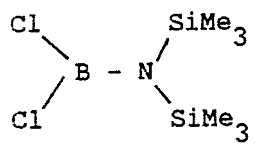

- 57,5 % en poids de polymères cycliques tels que définis à l'exemple 1.

Dans un réacteur double enveloppe de 2 litres séché et purgé à l'azote puis refroidi à -40° C, on introduit :

- 1 litre d'hexane sec
- 161,5 g du liquide obtenu précédemment
- 33,5 g de $BCl_3$

On introduit alors dans ce mélange 13 moles d'ammoniac en 5 heures.

Après filtration sous azote, rinçage du gâteau et évaporation du solvant, on isole 121,5 g d'une huile trouble et légèrement jaune.

Le rendement est de 85,8 %.

Les caractéristiques du polymère constituant cette huile sont les suivantes :

$\overline{M}n$ = 660
$\overline{M}w$ = 1030
IP = 1,55
TGA (sous He à 850° C) = 24,96 %

**Revendications**

1/ Procédé de préparation de polymères à base de bore et d'azote caractérisé par le fait que l'on fait réagir a) une composition de matière obtenue par thermolyse en masse d'au moins un composé de formule (1) :

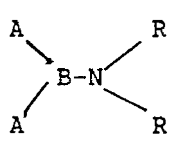

(1)

dans laquelle A représente un atome d'halogène et R un radical choisi parmi l'atome d'hydrogène, les radicaux hydrocarbonés et es radicaux organosilylés et hydrogénoorganosilylés, sur b) un composé comprenant au moins un groupement $NH_2$.

2/ Procédé selon la revendication 1 caractérisé en ce que la réaction s'effectue en masse.

3/ Procédé selon la revendication 1 caractérisé en ce que la réaction s'effectue en solution dans un solvant organique anhydre.

4/ Procédé selon l'une quelconque des revendications précédentes caractérisé en ce que la réaction s'effectue en outre en présence d'un trihalogénoborane.

5/ Procédé selon la revendication 4 caractérisé en ce que le trihalogénoborane est le trichloroborane.

6/ Procédé selon l'une quelconque des revendications précédentes caractérisé en ce que A représente le chlore.

7/ Procédé selon l'une quelconque des revendications précédentes caractérisé en ce que le radical R hydrocarboné est choisi parmi les radicaux alkyles, cycloalkyles, aryles, alkylaryles, arylalkyles, alcényles et alcynyles.

8/ Procédé selon l'une quelconque des revendications 1 à 6 caractérisé en ce que le radical R est un radical organosilylé.

9/ Procédé selon la revendication 8 caractérisé en ce que le radical R est un radical (triorgano)-silylé.

10/ Procédé selon la revendication 9 caractérisé en ce que le radical R est un radical (trialkyl)silylé.

11/ Procédé selon l'une quelconque des revendications précédentes caractérisé en ce que ledit composé présentant au moins un groupement $NH_2$ répond à la formule (2) suivante :

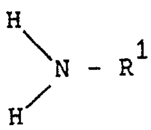

(2)

dans laquelle le radical $R^1$ est choisi parmi l'atome d'hydrogène, les radicaux hydrocarbonés et les radicaux organosilylés et hydrogénoorganosilylés.

12/ Procédé selon la revendication 11 caractérisé en ce que le radical $R^1$ est choisi parmi l'atome d'hydrogène et les radicaux alkyles.

13/ Procédé selon la revendication 12 caractérisé en ce que le radical $R^1$ est l'atome d'hydrogène.

14/ Procédé selon l'une quelconque des revendications précédentes caractérisé en ce que ladite composition de matière est substantiellement exempte de composés de formule (1).

15/ Procédé selon l'une quelconque des revendications précédentes caractérisé en ce que lesdits polymères à base de bore et d'azote sont ultérieurement chauffés dans le but d'améliorer leur tenue thermique.

16/ Composition de matière susceptible d'être utilisée pour la préparation de polymères à base de bore et d'azote selon notamment un procédé tel que décrit aux revendications 1 à 15, caractérisée par le fait qu'elle est obtenue par thermolyse en masse d'un composé de formule (1) :

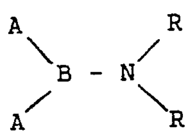

dans laquelle A représente un atome d'halogène et R un radical choisi parmi l'atome d'hydrogène, les radicaux hydrocarbonés et les radicaux organosilylés et hydrogénoorganosilylés.

17/ Composition de matière selon la revendication 16 caractérisée en ce que A est un atome de chlore.

18/ Composition de matière selon l'une quelconque des revendications 16 et 17, caractérisée en ce que le radical R hydrocarboné est choisi parmi les radicaux alkyles, cycloalkyles, aryles, alkylaryles, arylalkyles, alcényles et alcynyles.

19/ Composition de matière selon l'une quelconque des revendications 16 et 17, caractérisée en ce que le radical R est un radical organosilylé.

20/ Composition de matière selon la revendication 19 caractérisée en ce que le radical R est un radical (triorgano)silylé.

21/ Composition de matière selon la revendication 20 caractérisée en ce que le radical R est un radical (trialkyl)silylé.

22/ Composition de matière selon l'une quelconque des revendications 16 à 21 caractérisée en ce qu'elle est substantiellement exempte de composés de formule (1).

23/ Fibre en nitrure de bore caractérisée en ce qu'elle est obtenue par filage puis pyrolyse dans une atmosphère inerte, sous vide, ou e préférence sous ammoniac, à une température allant de 100 à 2000° C, d'un polymère à base de bore et d'azote susceptible d'être obtenu par un procédé tel que défini à l'une quelconque des revendications 1 à 15.